# EUROPEAN PATENT APPLICATION

(11) **EP 4 703 175 A1**
(43) Date of publication of application: **04.03.2026**
(21) Application number: 24196778.5
(22) Date of filing: 27.08.2024
(51) Int. Cl.: B60K 35/25, B60K 35/65

(54) **METHOD FOR CONTROLLING A USER INPUT DEVICE FOR A VEHICLE, DATA PROCESSING DEVICE, USER INPUT SYSTEM, COMPUTER PROGRAM, COMPUTER READABLE STORAGE MEDIUM, AND VEHICLE**

(71) Applicant: Volvo Car Corporation, 405 31 Göteborg (SE)
(72) Inventor: WICKMAN, Casper, 40531 Göteborg (SE); MYHRMAN, Martin, 40531 Göteborg (SE); LUNDGREN, Patrik, 40531 Göteborg (SE); TENGSTRAND, Per, 40531 Göteborg (SE)
(74) Representative: Maiwald GmbH

(57) **Abstract**

The disclosure relates to a method for controlling a user input device (14) for a vehicle (10), wherein the user input device (14) is usable by a plurality of users (16) and/or from a plurality of user positions (18). The method comprises obtaining first data indicative of a manipulation of the user input device (14). Additionally, the method comprises obtaining second data indicative of one user (16) out of the plurality of users (16) and/or indicative of one user position (18) out of the plurality of user positions (18), wherein the one user (16) is manipulating the user input device (14) and/or wherein the user input device (14) is manipulated from the one user position (18). Furthermore, the method comprises selecting a control mode of the user input device (14) out of a plurality of control modes of the user input device (14) based on the second data (78). Additionally, the method comprises triggering an output based on the selected control mode and based on the first data (76). Moreover, a data processing device (64) is explained. Additionally, a user input system (12) for a vehicle (10) is presented. Further, a computer program (72) and a computer-readable storage medium (70) are presented. Additionally, a vehicle (10) comprising said data processing device (64) is explained.

## Description

### TECHNICAL FIELD

The present disclosure relates to a method for controlling a user input device for a vehicle.

Furthermore, the disclosure is about a data processing device comprising means for carrying out the method mentioned above.

The disclosure is additionally directed to a user input system for a vehicle comprising a data processing device mentioned above.

Moreover, the disclosure is about a computer program comprising instructions which, when the program is executed by a computer, cause the computer to carry out the method mentioned above.

Further, the disclosure is about a computer-readable storage medium comprising instructions which, when executed by a computer, cause the computer to carry out the method mentioned above.

In addition, the disclosure is about a vehicle comprising a user input system mentioned above.

### BACKGROUND ART

Modem vehicles offer a variety of functionalities, e.g. in the fields of occupant comfort, entertainment, communication, and/or navigation. Moreover, modern vehicles can be adapted to a user's preferences by adjusting a number of vehicle settings. These functionalities and vehicle settings may be adjusted using associated controls such as push buttons, rotary knobs, rotary-push knobs, sliders, touch screens etc. Thus, when designing a vehicle, an appropriate control needs to be provided for each functionality. However, due to the high number of functionalities it is usually not appropriate to provide one control per functionality. This applies both from a perspective of usability and from a perspective of keeping the vehicle structurally simple. Thus, very often shared controls are provided which allow adjustment of more than one functionality. Moreover, care has to be taken that a control associated with a functionality that may be used by more than one vehicle occupant is accessible by all relevant vehicle occupants.

### SUMMARY

An objective of the present disclosure is to further enhance the usability of controls in the vehicle.

The problem is at least partially solved or alleviated by the subject matter of the independent claims of the present disclosure, wherein further examples are incorporated in the dependent claims.

The problem is at least partially solved or alleviated by a method for controlling a user input device for a vehicle, wherein the user input device is usable by a plurality of users and/or from a plurality of user positions, the method comprising:
- obtaining first data indicative of a manipulation of the user input device,
- obtaining second data indicative of one user out of the plurality of users and/or indicative of one user position out of the plurality of user positions, wherein the one user is manipulating the user input device and/or wherein the user input device is manipulated from the one user position,
- selecting a control mode of the user input device out of a plurality of control modes of the user input device based on the second data, and
- triggering an output based on the selected control mode and based on the first data.

The general idea underlying the method for controlling a user input device for a vehicle is, thus, to detect which of the plurality of users performs a manipulation of the control and/or from which user position a manipulation is performed. Based on the user executing the manipulation and/or based on the user position from which the manipulation is performed, a control mode is selected, and an output is triggered. Consequently, the control mode is selected specifically for the relevant user and/or for the relevant user position, such that the output is dependent on the user carrying out the manipulation and/or on the user position from which the manipulation is carried out.

This allows a plurality of users to make settings and/or adjust functionalities that affect themselves, but not others. This is done with just a single user input device that is shared between the users, as the corresponding control mode is always selected appropriately and can be configured accordingly. In other words, this prevents a user from manipulating a setting and/or adjusting a functionality that affects another user.

In this context, users can be occupants of the vehicle, such as the driver and/or a passenger, in particular a front seat passenger. Alternatively, the plurality of users may comprise a plurality of passengers sitting on a rear bench of the vehicle. Moreover, a user position may be a seat positions in a vehicle, such as the driver's position and/or the front seat passenger position.

Accordingly, the control modes can be adjusted in such a way that, for example, settings for driving behavior such as the driving mode or similar can only be changed or adjusted in the control mode which is selected when manipulations are carried out by the driver and/or from the driver's position. In the same manner certain functionalities or settings may only be changeable or adjustable in a control mode which is selected when manipulations are carried out by the front seat passenger and/or from the front seat passenger's position.

In an example, the obtained first data can comprise position data describing a position of the user input device. The position data of the user input device may be indicative of the position of the user input device or a change in the position of the user input device, when manipulated. It is conceivable that the position of the user input device can be changed by turning or pressing the user input device. Thus, the position may be a rotary position and/or a translatory position. Furthermore, it is additionally or alternatively conceivable that the user input device is mounted displaceably. The default position of the user input device can be in the center and from there it can be moved in four different directions, for example.

In an example, the method can further comprise obtaining third data indicative of a movement of at least one of the plurality of users and/or indicative of a position of a body portion of at least one of the plurality of users, wherein the second data is obtained based on the third data. Using the third data a movement of at least one of the plurality of users towards the user input device may be detectable. Additionally or alternatively a position of a body portion of at least one of the plurality of users in proximity to the user input device is detectable. For example, one may determine that a user has his hand in the vicinity of the user input device or a user is already touching user input device. The third data indicative of a movement can be collected within a monitoring space, for example, the vehicle interior or a portion of the vehicle interior, in particular at least the portion surrounding and comprising the user interface.

In an example, the third data comprises image data and/or lidar data and/or radar data. If the third data comprise image data, the data can be provided particularly easily and cheaply using one or more cameras. In this way, for example, several cameras can be used for 3D movement detection and/or for 3D position detection. If the third data comprise lidar data, optical distance and speed measurements can be carried out particularly accurately on the basis of this data. In addition, lidar data can be provided independently of the lighting conditions. If the third data comprise radar data, it is conceivable that a radar with electromagnetic waves of lower frequency could be used. This allows the smallest movements to be registered regardless of the lighting conditions. If the third data comprise several data types, the above advantages are combined, whereby a movement of a user or a position of a body portion of a user can be determined particularly reliably and accurately.

According to an example, the third data are provided by an occupant monitoring system. The occupant monitoring system may be or may comprise a driver monitoring system and/or a front seat passenger monitoring system. Moreover, the occupant monitoring system may comprise a camera unit and/or a lidar unit and/or a radar unit.

In an example, obtaining the second data comprises applying a feature extraction technique and/or an object recognition technique to the third data. These techniques are reliable and efficient such that the second data may be obtained with high reliability and efficiency. These techniques can also use machine learning. For example, certain user behavior patterns can be considered.

In an example, each of the plurality of control modes is assigned to one user out of the plurality of users and/or to one user position out of the plurality of user positions. As explained above, this makes it possible to realize that different users can carry out different settings such as configurations or operations via the user input device depending on the assigned control mode and that other settings are not possible or are at least not defined as default. Altogether, user specific manipulation of the user input device is achieved. Additionally or alternatively user position specific manipulation of the user input device is achieved.

In an example, the selected control mode is a system configuration mode or a system operation mode. The system configuration mode is a mode in which the relevant user adjusts system settings. It is conceivable that the relevant user adjusts his or her own default settings. However, it is also possible that one user adjusts the system settings of another user if that one user explicitly selects to do so. The system operation mode is a mode in which the relevant user operates or manipulates a system associated with the user input device. Thus, in the system operation mode, the relevant user may adjust a system as desired.

In an example, the triggered output is configured to select one operation function out of a plurality of operation functions associated with the selected control mode and based on the first data, wherein the control mode has been selected based on the second data before. In other words, the user input device may be manipulated in order to select one operations function. Examples of operation functions are interior temperature adjustment, interior ventilation adjustment, seat temperature adjustment, seat ventilation adjustment, driving mode selection, recuperation intensity adjustment, speaker volume adjustment, communication function adjustment, navigation function adjustment and/or user setting adjustment. In an example, each of the displacements of the user input device described above can be assigned one of the operation functions associated with the selected control mode. More generally speaking, the operation functions can be functions of the system configuration mode and/or functions of the system operation mode.

In an example, the triggered output is configured to cause one or more of:
- an adjustment of an interior temperature of the vehicle,
- an adjustment of an interior ventilation of the vehicle,
- an adjustment of a seat temperature of the vehicle,
- an adjustment of a seat ventilation of the vehicle,
- an adjustment of a driving mode,
- an adjustment of a recuperation intensity,
- an adjustment of a speaker volume,
- an adjustment of a communication function,
- an adjustment of a navigation function,
- an adjustment of a user setting.

Thus, a great variety of adjustments may be made by manipulating the user input device. As has been mentioned before, the user input device may be configured to adjust more than one function. To this end, the desired function needs to be selected first. Thereafter, the selected function can be adjusted. Altogether, one single user input device may be used in connection with a plurality of functions.

In another example, the triggered output is configured to cause adjustment of a displayed view. The displayed view may be selected based on the selected control mode. Thus, if a user, such as the passenger, interacts with the user input device to configure and/or operate the system, a particular user view, in this case a passenger view, may be displayed. The same applies when the driver interacts with the user input device. Additionally or alternatively, the displayed view may be adjusted based on a selected function and/or based on an adjustment of the function.

In an example, the method further comprises triggering a user feedback of the user input device based on the selected control mode. In this way, the user may immediately notice that an appropriate control mode has been selected. The user feedback may be haptic and/or acoustic and/or visual. The visual feedback can be provided via display. The visual feedback may comprise the above-mentioned user view, which is automatically displayed and which, for example, can be individually configured. Alternatively or additionally, a light on the user input device is also conceivable.

The problem is further at least partially solved or alleviated by a data processing device comprising means for carrying out the method according to the present disclosure. Such a data processing device ensures that it is detected which of the plurality of users performs a manipulation of the user input device and/or from which user position out of a plurality of user positions a manipulation is performed. Further this ensures that a user can make settings and/or adjust functionalities that affect himself or herself, but not others. In this context, a user input device may be used by the plurality of users and/or from the plurality of user positions, i.e. the user input device may be shared.

The problem is further at least partially solved or alleviated by a user input system for a vehicle. The user input system comprises a user input device, a user monitoring device, and a data processing device according to the present disclosure. The data processing device is communicatively coupled to the user input device. Moreover, the data processing device is communicatively coupled to the user monitoring device. Such a user input system ensures that it is detected which of the several users performs a manipulation of the user input device and/or from which user position a manipulation is performed. Further this ensures that a user can make settings and/or adjust functionalities that affect himself or herself, but not others. In this context, a user input device may be used by the plurality of users and/or from the plurality of user positions, i.e. the user input device may be shared.

In an example, the user input device comprises a rotary-push knob. The rotary-push knob can be manipulated by the user by turning and/or pushing. In addition, the rotary-push knob can be mounted displaceably, e.g. the rotary-push knob may be translatorily movable sidewards, upwards and/or downwards. In this context, the user input device may have a default position in a center. Starting from there, the user input device may be movable in four different directions. Thus, a rotary-push know may be manipulated in a plurality of different ways, thereby allowing adjustment of different functionalities. At the same time, operation of a rotary-push know is intuitive and may be done blindly.

In an example, the user monitoring device comprises a camera unit and/or a lidar unit and/or a radar unit. If the user monitoring device comprise a camera unit, the image data can be provided particularly easily and cheaply using one or more cameras. In this way, for example, several cameras can be used for 3D movement detection and/or 3D position detection. If the user monitoring device comprises a lidar unit, optical distance and speed measurements can be carried out particularly accurately. In addition, a lidar unit can be operated independently of the lighting conditions. If the user monitoring device comprise a radar unit, it is conceivable that a radar with electromagnetic waves of lower frequency can be used. This allows the smallest movements to be registered regardless of the lighting conditions. If the user monitoring device comprise several of the units, the advantages are combined, whereby a movement of a user or a position of a body portion of a user can be determined particularly reliably and accurately by the user monitoring device.

The problem is further at least partially solved or alleviated by a computer program comprising instructions which, when the computer program is executed by a computer, cause the computer to carry out the method according to the present disclosure. Such a computer program ensures that it is detected which of the plurality of users performs a manipulation of the user input device and/or from which user position out of a plurality of user positions a manipulation is performed. Further this ensures that a user can make settings and/or adjust functionalities that affect himself or herself, but not others. In this context, a user input device may be used by the plurality of users and/or from the plurality of user positions, i.e. the user input device may be shared.

The problem is further at least partially solved or alleviated by a computer-readable storage medium comprising instructions which, when executed by a computer, cause the computer to carry out the method according to the present disclosure. Such a computer program ensures that it is detected which of the plurality of users performs a manipulation of the user input device and/or from which user position out of a plurality of user positions a manipulation is performed. Further this ensures that a user can make settings and/or adjust functionalities that affect himself or herself, but not others. In this context, a user input device may be used by the plurality of users and/or from the plurality of user positions, i.e. the user input device may be shared.

The problem is further at least partially solved or alleviated by a vehicle comprising a user input system according to the present disclosure. Such a vehicle ensures that it is detected which of the plurality of users performs a manipulation of the user input device and/or from which user position out of a plurality of user positions a manipulation is performed. Further this ensures that a user can make settings and/or adjust functionalities that affect himself or herself, but not others. In this context, a user input device may be used by the plurality of users and/or from the plurality of user positions, i.e. the user input device may be shared.

It should be noted that the above examples may be combined with each other irrespective of the aspect involved.

These and other aspects of the present invention will become apparent from and elucidated with reference to the examples described hereinafter.

### BRIEF DESCRIPTION OF DRAWINGS

Examples of the invention will be described in the following with reference to the following drawings:
- Fig. 1: shows a vehicle according to the present disclosure comprising a data processing device according to the present disclosure, wherein method for controlling a user input device may be executed using the data processing device,
- Fig. 2: shows a top view of a user input device forming part of a user input system according to the present disclosure in in a schematic representation,
- Fig. 3: shows a side view of the user input device of Figure 2,
- Fig. 4: shows the data processing device according to the present disclosure in a schematic representation, wherein also associated data is shown, and
- Fig. 5: illustrates steps of the method for controlling a user input device.

### DETAILED DESCRIPTION

The figures are merely schematic representations and serve only to illustrate examples of the invention. Identical or equivalent elements are in principle provided with the same reference signs.

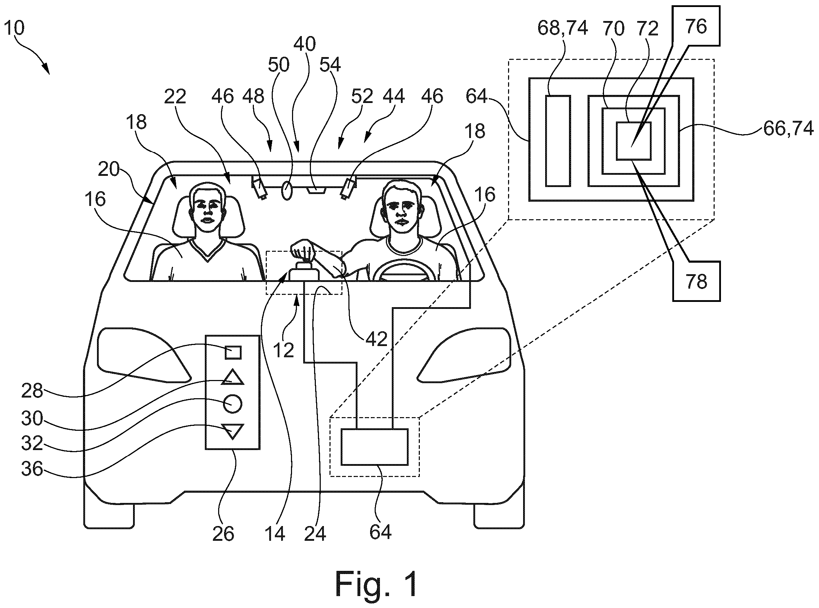

Figure 1 shows a vehicle 10 comprising a user input system 12 with a user input device 14 for two users 16, wherein the users 16 are each located in a user position 18. The user input device 14 can be manipulated by both users 16, whereby its operation and function will be described in more detail later on.

Alternatively, it is also conceivable that the user input system 12 is provided for more than two users 16, in which case each user 16 is also in a user position 18.

Users 16 are understood to be occupants of the vehicle 10 such as driver and/or passengers in particular a front seat passenger. In particular, users 16 are understood to be occupants of the vehicle 10 by whom the user input device 14 can be manipulated or who manipulate the user input device 14. In the present case, for example, the right-hand user 16 is the driver and the left-hand user 16 is the front passenger. Both may manipulate the user input device 14 which in the present example is located on a middle console or in a central position on an instrument panel of the vehicle 10.

Accordingly, the user positions 18 are possible seating positions for occupants in the vehicle 10, such as the driver's position on the right and the front seat passenger's position on the left. The user positions 18 may also include other passenger positions. In particular, user positions 18 are understood to be seating positions that allow an occupant in the seating position to manipulate the user input device 14.

The vehicle 10 comprises a vehicle interior 20. The vehicle interior 20 may form a monitoring space 22. Alternatively, the monitoring space 22 may be a portion 24 of the vehicle interior 20. The portion 24 of the vehicle interior 20 therefore corresponds to a sub-volume of the vehicle interior 20. In both cases, at least part of the user input device 14 is located within the monitoring space 22.

Further, the user input system 12 includes a feedback unit 26 which is configured to provide feedback to one user 16 or several users 16. The feedback unit 26 can comprise a display 28 for generating visual feedback, a light 30 for generating visual feedback, a speaker 32 for generating acoustic feedback and/or a vibration unit 36 for generating physical feedback.

In Figure 1, the feedback unit 26 is represented schematically only.

The display 28 can be arranged in the vehicle interior 20, for example in the center of the dashboard. Alternatively or additionally, the display 28 can be provided in the vicinity of the user input device 14 or the user input device 14 can comprise the display 28.

The light 30 can also be arranged in the vehicle interior 20, for example in the center of the dashboard. Alternatively or additionally, the light 30 can be provided in the vicinity of the user input device 14 or the user input device 14 can comprise the light 30.

The vibration unit 36 is associated with the user input device 14. The user input device 14 can comprise the vibration unit 36.

Furthermore, the user input system 12 comprises a user monitoring device 40, which is configured to detect a movement of each of the users 16 within the monitoring space 22. Additionally or alternatively, the user monitoring device 40 is configured to detect a position of a body portion 42 of each of the users 16 within the monitoring space 22. The body portion 42 can be an arm or a hand, for example.

The user monitoring device 40 comprises a camera unit 44 comprising at least one camera 46, a lidar unit 48 comprising at least one lidar sensor 50, and a radar unit 52 comprising at least one radar sensor 54.

It is noted that in other examples, the user monitoring device 40 may comprise only one out of the camera unit 44, the lidar unit 48 and the radar unit 52. In still another example, the user monitoring device 40 may comprise two out of the camera unit 44, the lidar unit 48 and the radar unit 52.

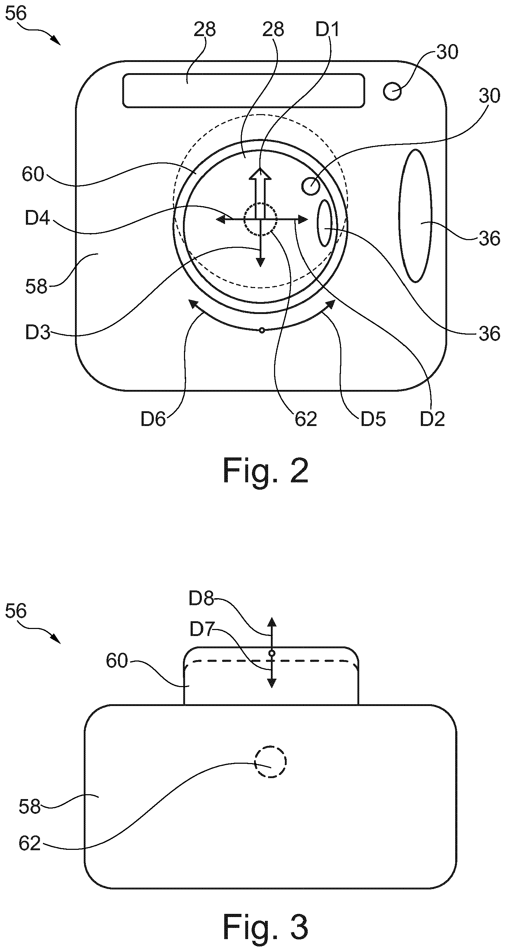

Figures 2 and 3 shows the user input device 14 in a more detailed, schematic representation. The user input device 14 comprises a rotary-push knob 56 comprising a knob 60 supported on a base 58.

The knob 60 has a circular cylindrical shape. Alternatively, other shapes are also conceivable. For example, the knob 60 can also be a knob 60 with a prismatic shape or an at least partially spherical shape.

The knob 60 is movably mounted relative to the base 58. The knob 60 can be moved from a default position, which is in the center of the base 58, in four directions D1, D2, D3, D4, indicated by the arrows, as shown in Figure 2. A displacement of the knob 60 in the direction D 1 is indicated by the large arrow, while the knob shown indicated by the dashed line represents a corresponding displacement in the direction D 1.

Furthermore, the knob 60 is mounted rotatably relative to the base 58. Thus, the knob 60 may be turned in the directions of rotation D5 and D6.

Furthermore, the knob 60 can be displaced from a default position towards the base 58 in the direction D7 and/or away from the base 58 in the direction D8. This means that the knob 60 may be pushed towards the base 58 and may be released. The knob 60 is spring-biased towards the released position. Figure 3 shows the knob 60 in a released position (solid lines) and in a displaced position (dashed line).

All these displacements of the rotary-push knob 56 are possible by applying an external force to the knob 60. The external force may result from a manipulation by one of the users 16.

Additionally, in accordance with the above explanations the display 28, the light 30 and the vibration unit 36 can be provided on the base 58 or on the knob 60 (see Figure 2).

Furthermore, the user input device 14 comprises at least one position sensor 62, which is configured to detect a displacement of the knob 60 in accordance with the above explanations.

In addition, the user monitoring device 40 comprises a data processing device 64 (cf. Figure 1).

The data processing device 64 comprises a data storage unit 66 and a data processing unit 68.

The data storage unit 66 comprises a computer-readable storage medium 70.

On the computer-readable storage medium 70, there is provided a computer program 72.

The computer program 72 and, thus, also the computer-readable storage medium 70, comprise instructions which, when executed by the data processing unit 68, or, more generally speaking, a computer, cause the computer or the data processing unit 68 to carry out a method for controlling a user input device for a vehicle.

Consequently, the data storage unit 66 and the data processing unit 68 form means 74 for carrying out a method for controlling a user input device for a vehicle.

In the present example, the data processing device 64 is communicatively coupled to the components of the vehicle 10, in particular to the user input device 14, more precisely its position sensor 62, the feedback unit 26 and the user monitoring device 40.

It is noted that even though in the present example, the data processing device 64 forms part of the vehicle 10, it is also possible that the data processing device 64 is provided outside the vehicle 10. In the latter case, the data processing device 64 may be wirelessly coupled to the components of the vehicle 10, in particular to the user input device 14, the feedback unit 26, and the user monitoring device 40.

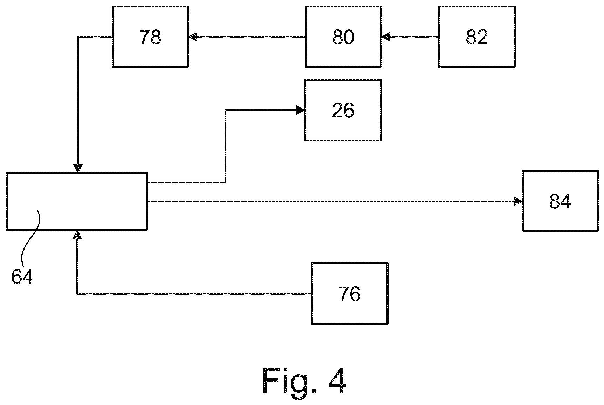

Figure 4 shows the data processing device 64 and associated data in a schematic representation.

The data processing device 64 is configured to receive first data 76 indicative of a manipulation of the user input device 14 that can be obtained from the position sensor 62.

The data processing device 64 is further configured to receive second data 78 indicative of one user 16 out of the plurality of users 16 and/or indicative of one user position 18 out of the plurality of user positions 18.

The second data 78 is obtained from a monitoring processing unit 80 of the user monitoring device 40, wherein the second data 78 is based on third data 82 indicative of a movement of at least one of the plurality of users 16 and/or indicative of a position of a body portion 42 of at least one of the plurality of users 16. The third data 82 is received by the monitoring processing unit 80 and obtained from the camera 46 of the camera unit 44 and/or the lidar sensor 50 of the lidar unit 48 and/or the radar sensor 54 of the radar unit 52. Accordingly, the third data 82 comprises image data and/or lidar data and/or radar data.

The monitoring processing unit 80 is configured such that a feature extraction technique and/or an object recognition technique can be applied to the third data 82 for generating the second data 78. The techniques can use machine learning. This allows the movements of the user 16 to be detected as well as the position of a body portion 42 of the user 16.

The data processing device 64 is communicatively connected to the feedback unit 26 wherein data processing device 64 is able to send a user feedback to the feedback unit 26.

In addition, the data processing device 64 is communicatively connected to a system unit 84 wherein data processing device 64 is able to send a control order or output to the system unit 84. The system unit 84 is representative of one or more of the following vehicle components: air conditioning system, heating system, seat heating system, seat ventilation system, control of driving mode, control of recuperation, control of speaker volume, control of communication function, navigation system, control of user setting.

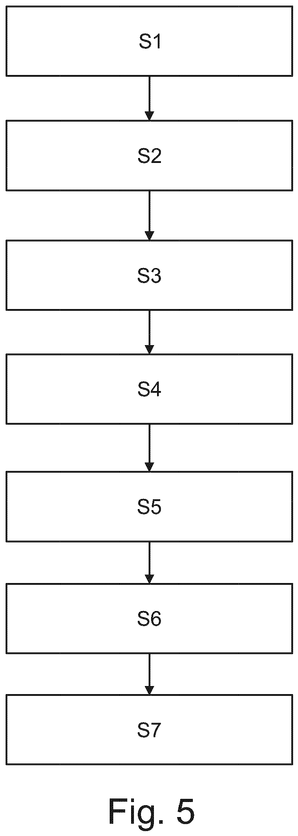

The data processing device 64 is configured for carrying out the method for controlling a user input device for a vehicle (cf. Figure 5).

This method comprises a first step S 1 which comprises obtaining first data 76 indicative of a manipulation of the user input device 14, wherein a manipulation of the user input device 14 is carried out by one of the users 16, and wherein a manipulation of the user input device 14 is possible in various ways according to the previous explanations. Thus, the knob 60 may be pushed, turned, moved to the left, moved to the right, moved to the front and/or moved to the back.

In a second step S2 third data 82 indicative of a movement of at least one of the plurality of users 16 and/or indicative of a position of a body portion 42 of at least one of the plurality of users 16 is obtained. The third data 82 comprises image data and/or lidar data and/or radar data. As a result, the user's movements can be detected as well as the position of a body portion 42 of the user 16.

In a third step S3 second data 78 indicative of one user 16 out of the plurality of users 16 is obtained, wherein the one user 16 is manipulating the user input device 14. Alternatively or additionally, in the third step S3 the second data 78 indicative of one user position 18 out of the plurality of user positions 18 is obtained, wherein the user input device 14 is manipulated from the one user position 18.

The second data 78 is based on the third data 82. Through the second data 78, the manipulation of the user input device 14 indicated by the first data 76 as well as the detected movements and/or the position of a body portions 42 are assigned to the users 14 and/or user positions 18.

In the present example, the driver may be manipulating the user input device 14 (cf. Figure 1) which may be reflected in the second data 78.

In a fourth step S4, one control mode of the user input device 14 out of a plurality of control modes of the user input device 14 is selected based on the second data 78. The control mode can be understood as a mode that defines a specific way of operation or configuration of the user input device 14. Thus, the control mode is a system configuration mode or a system operation mode. Further, each control modes comprises a plurality of operation functions.

Each of the plurality of control modes is assigned to one user 16 out of the plurality of users 16, wherein the control mode is selected based on the user 16 manipulating the user input device 14. Alternatively or additionally each of the plurality of control modes is assigned to one user position 18 out of the plurality of user positions 18, wherein the control mode is selected based on the user position 18 from which the user input device 14 is manipulated.

In a fifth step S5 one operation function out of the plurality of operation functions of the control mode is selected based on the first data 76. Each of the displacements of knob 60 described above can be assigned to one of the operation functions of the one control mode and correspond to a specific setting.

In a sixth step S6 an output is triggered based on the selected control mode and based on the first data 76, wherein the triggered output is configured to cause one or more of: an adjustment of an interior temperature of the vehicle 10, an adjustment of an interior ventilation of the vehicle 10, an adjustment of a seat temperature of the vehicle 10, an adjustment of a seat ventilation of the vehicle 10, an adjustment of a driving mode, an adjustment of a recuperation intensity, an adjustment of a speaker volume, an adjustment of a communication function, an adjustment of a navigation function, an adjustment of a user setting.

The triggered output is sent to the associated system unit 84, to cause one or more of the above adjustments.

In a seventh step S7 a user feedback of the user input device 14 is triggered based on the selected control mode. The user feedback comprises a visual feedback, an acoustic feedback and/or a haptic feedback. The feedback can be provided by the feedback unit 26 and emitted accordingly via the display 28, light 30, speaker 32 and/or vibration unit 36 described above in order to provide feedback to the user 16 who is manipulating the user input device 14.

Thus, in one specific example, the triggered output may be configured to cause an adjustment of an interior temperature of the vehicle 10 for a driver zone, if the driver is manipulating the user input device 14.

In another specific example, the triggered output may be configured to cause an adjustment of an interior temperature of the vehicle 10 for a front seat passenger zone, if the front seat passenger is manipulating the user input device 14.

In another specific example, the triggered output may be configured to cause an adjustment of an interior ventilation for a driver zone, if the driver is manipulating the user input device 14.

In another specific example, the triggered output may be configured to cause an adjustment of an interior ventilation for a front seat passenger zone, if the front seat passenger is manipulating the user input device 14.

In another specific example, the triggered output may be configured to cause an adjustment of a seat temperature and/or a seat ventilation for a driver seat, if the driver is manipulating the user input device 14.

In another specific example, the triggered output may be configured to cause an adjustment of a seat temperature and/or a seat ventilation for a front passenger seat, if the front passenger is manipulating the user input device 14.

In a further specific example, adjustment of a driving mode and/or an adjustment of a recuperation intensity may be reserved to the driver, i.e. these adjustments are only available if the drive is manipulating the user input device 14.

Moreover, in still another specific example, the triggered output may be configured to cause adjustment of a user setting associated with the driver, if the driver is manipulating the user input device 14. Similarly, the triggered output may be configured to cause adjustment of a user setting associated with the front seat passenger, if the front seat passenger is manipulating the user input device 14.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 10: vehicle
- 12: user input system
- 14: user input device
- 16: user
- 18: user positions
- 20: vehicle interior
- 22: monitoring space
- 24: portion
- 26: feedback unit
- 28: display
- 30: light
- 32: speaker
- 36: vibration unit
- 40: user monitoring device
- 42: body portion
- 44: camera unit
- 46: camera
- 48: lidar unit
- 50: lidar sensor
- 52: radar unit
- 54: radar sensor
- 56: rotary-push knob
- 58: base
- 60: knob
- 62: position sensor
- 64: data processing device
- 66: data storage unit
- 68: data processing unit
- 70: computer-readable storage medium
- 72: computer program
- 74: means for carrying out a method for controlling a user input device for a vehicle
- 76: first data
- 78: second data
- 80: monitoring processing unit
- 82: third data
- 84: system unit

- D1: sliding direction
- D2: sliding direction
- D3: sliding direction
- D4: sliding direction
- D5: direction of rotation
- D6: direction of rotation
- D7: direction
- D8: direction

## Claims

1. A method for controlling a user input device (14) for a vehicle (10), wherein the user input device (14) is usable by a plurality of users (16) and/or from a plurality of user positions (18), the method comprising:
- obtaining first data (76) indicative of a manipulation of the user input device (14) (S1),
- obtaining second data (78) indicative of one user (16) out of the plurality of users (16) and/or indicative of one user position (18) out of the plurality of user positions (18), wherein the one user (16) is manipulating the user input device (14) and/or wherein the user input device (14) is manipulated from the one user position (18) (S3),
- selecting a control mode of the user input device (14) out of a plurality of control modes of the user input device (14) based on the second data (78) (S4), and
- triggering an output based on the selected control mode and based on the first data (76) (S6).

2. The method of claim 1, further comprising obtaining third data (82) indicative of a movement of at least one of the plurality of users (16) and/or indicative of a position of a body portion (42) of at least one of the plurality of users (16), wherein the second data (78) is obtained based on the third data (82) (S2).

3. The method according to claim 2, wherein the third data (82) comprises image data and/or lidar data and/or radar data.

4. The method according to claim 2 or 3, wherein obtaining the second data (78) comprises applying a feature extraction technique and/or an object recognition technique to the third data (82).

5. The method according to any one of the preceding claims, wherein each of the plurality of control modes is assigned to one user (16) out of the plurality of users (16) and/or to one user position (18) out of the plurality of user positions (18).

6. The method according to any one of the preceding claims, wherein the selected control mode is a system configuration mode or a system operation mode.

7. The method of any one of the preceding claims, wherein the triggered output is configured to cause one or more of:
- an adjustment of an interior temperature of the vehicle (10),
- an adjustment of an interior ventilation of the vehicle (10),
- an adjustment of a seat temperature of the vehicle (10),
- an adjustment of a seat ventilation of the vehicle (10),
- an adjustment of a driving mode,
- an adjustment of a recuperation intensity,
- an adjustment of a speaker volume,
- an adjustment of a communication function,
- an adjustment of a navigation function,
- an adjustment of a user setting.

8. The method according to any one of the preceding claims, further comprising triggering a user feedback of the user input device (14) based on the selected control mode (S7).

9. A data processing device (64) comprising means (74) for carrying out the method of any one of the preceding claims.

10. A user input system (12) for a vehicle (10), the user input system (12) comprising a user input device (14), a user monitoring device (40), and a data processing device (64) according to claim 9, wherein the data processing device (64) is communicatively coupled to the user input device (14) and wherein the data processing device (64) is communicatively coupled to the user monitoring device (40).

11. The user input system (12) of claim 10, wherein the user input device (14) comprises a rotary-push knob (56).

12. The user input system (12) of claim 10 or 11, wherein the user monitoring device (40) comprises a camera unit (44) and/or a lidar unit (48) and/or a radar unit (52).

13. A computer program (72) comprising instructions which, when the program is executed by a computer, cause the computer to carry out the method of claims 1 to 8.

14. A computer-readable storage medium (70) comprising instructions which, when executed by a computer, cause the computer to carry out the method of claims 1 to 8.

15. A vehicle (10) comprising a user input system (12) of any one of claims 10 to 12.
